(19) Europäisches Patentamt
European Patent Office
Office européen des brevets

(11) **EP 1 191 388 B1**

(12) **EUROPEAN PATENT SPECIFICATION**

(45) Date of publication and mention
of the grant of the patent:
**17.10.2007 Bulletin 2007/42**

(51) Int Cl.:
*G03B 23/04* (2006.01)     *B65G 59/06* (2006.01)
*H04N 1/00* (2006.01)     *H04N 1/12* (2006.01)
*H04N 1/191* (2006.01)

(21) Application number: **01120569.7**

(22) Date of filing: **29.08.2001**

(54) **Slide scanner with means for separating the slides from a stack**

Dia-Scanner mit Mitteln zum Trennen der Dias von einem Stapel

Numériseur de diapositives avec des moyens pour séparer les diapositives empilées

(84) Designated Contracting States:
**DE FR GB**

(30) Priority: **31.08.2000 JP 2000262479**
**25.04.2001 JP 2001128162**

(43) Date of publication of application:
**27.03.2002 Bulletin 2002/13**

(73) Proprietor: **FUJIFILM Corporation**
**Minato-ku**
**Tokyo (JP)**

(72) Inventor: **Tsuji, Junichi,**
**c/o Fuji Photo Film Co., Ltd.**
**Ashigara-kami-gun, Kanagawa (JP)**

(74) Representative: **Klunker . Schmitt-Nilson . Hirsch**
**Winzererstrasse 106**
**80797 München (DE)**

(56) References cited:
**DE-B- 1 089 997          DE-C- 955 828**
**US-A- 4 389 803**

- **PATENT ABSTRACTS OF JAPAN vol. 1999, no. 14, 22 December 1999 (1999-12-22) -& JP 11 249238 A (MINOLTA CO LTD), 17 September 1999 (1999-09-17)**
- **PATENT ABSTRACTS OF JAPAN vol. 007, no. 104 (M-212), 6 May 1983 (1983-05-06) -& JP 58 026731 A (ASAHI SEIKOU KK), 17 February 1983 (1983-02-17)**

## Description

BACKGROUND OF THE INVENTION

1. Field of the Invention

The present invention relates to slide mount carrier according to the preamble of claim 1. Such carrier is used as an image reading apparatus or a slide mount projector. Particularly, the invention relates to slide mount carrier including a mount supply device having a mount outlet whose a height is automatically adjusted in accordance with a thickness of the slide mount.

2. Description Related to the Prior Art

A slide mount carrier pushes out slide mounts (slide films) one by one through a mount outlet of a supply mount cartridge, and conveys them to a withdraw mount cartridge. Between the supply mount cartridge (hereafter a supply cartridge) and the withdraw mount cartridge (hereafter a withdraw cartridge), a projecting station or a scanning station is disposed. For example, an image reading apparatus for slide mount has a line sensor in the scanning station, and image data of the slide mount are read out while the slide mount is conveyed in a sub scanning direction at a certain speed. After digital processing of the image data, an image thereof is printed on a photographic paper with a printer processor.

The slide mount is constructed of a reversal film and a frame sheet, and the frame sheet is folded to sandwitch the reversal film. The slide mounts are 1mm-3.2mm in thickness and the thickness is different in accordance with mount makers or types. The supply cartridge must have the mount outlet whose size is little larger than that of the slide mount having the maximum thickness, so that it may pass through it. Accordingly, the height of the outlet is more than 3.2mm. However, two slide mounts whose thickness is 1-1.5mm are often fed out through the outlet at the same time.

Japanese Utility Model Laid-open Number H5-11149 discloses a slide mount carrier in which a supply cartridge having a shape of a rectangular parallelepiped tube is fixed. At a mount outlet of the supply cartridge, an elastic segment is attached. A free end of the elastic segment has a curved portion which is curved into the mount supply cartridge. The curved portion aligns front edges of the slide mounts. Further, some of the slide mounts have protrusions. The protrusion protrudes from a rear edge of the slide mount in a height direction. In this case, the curved portion engages with the protrusion to prevent a multi-feed such that the plural slide mounts fed at the same time in overlaying.

But the elastic segment is worn and deteriorated with age. Therefore, the effect of the elastic segment decreases. Further, when the supply cartridge contains the slide mounts of various types in thickness, the elastic segment must have a separation force for the slide mount. The separation force is decided in accordance with properties of the elastic segment. However, it is difficult to form the elastic segment having the adequate separation force.

Japanese Patent Laid-open Number H11-112714 discloses a slide mount carrier on which a supply cartridge and a withdraw cartridge are removably set. Where the supply cartridge is set, a supply roller is disposed, and where the withdraw cartridge is set, a withdraw roller is disposed. A supply feed roller-pair and a withdraw feed roller-pair are disposed near the supply roller and the withdraw roller respectively. Between the supply feed roller and the withdraw feed roller, there is a movable stage that is moved by a screw mechanism.

The supply roller enters through a bottom opening into the supply cartridge and contacts the lowest slide mount. When the roller is rotated, the lowest slide mount is fed through the mount outlet. The slide mount is nipped in the supply feed roller-pair and loaded on the movable stage. On the movable stage, two sets of stage roller-pairs are disposed on both sides of an opening, nip the slide mount on upper and bottom faces, and rotate to set the slide mount on the opening. While the movable stage moves on a reading line at a predetermined speed, an image of the slide mount is read with a CCD line sensor. Then, the stage roller-pair rotates to feed it to an withdraw feed roller-pair. The withdraw feed roller-pair nips the slide mount on upper and bottom faces and rotates to feed it onto the withdraw roller by which the slide mount is delivered to a withdraw cartridge.

The slide mount carrier has a shielding plate at the mount outlet for adjusting a size thereof to prevent a multi-feed. A position of the shielding plate is adjusted by manually in accordance with the thickness of the slide mount. Therefore the adjusting is troublesome. Further, it is hard to prevent the multi-feed of the slide mount, when the slide mounts of various types in thickness are contained in the supply cartridge.

It is required for the feed roller-pair to convey the slide mount at a high speed, and for the stage roller-pair to accurately set the slide mount in a predetermined position on the opening. However, in the mount carrier described above, the feed roller-pair and the stage roller-pair are formed of a same material and have a same shape, and therefore, don't have characters to fulfill such requirements. Further, as the slide mount has a rectangular image area (film part), the frame sheet has different sizes in width between the lateral sides and the end sides. The slide mount is nipped on its upper and bottom faces in the feed roller-pair and the stage roller-pair. If the slide mount is mounted in the supply cartridge in a failure direction, rollers often touch the image area.

In accordance with the preamble of claim 1. DE-A-1 089 997 discloses a slide mount carrier in which a tiltable pressing member is biased into a closing direction in which only one slide mount can pass the pressure member. The bias is obtained by a load member and a coil spring, the load member being slidably arranged between the pressure member and the coil spring.

A similar mechanism is shown in US-A-4 389 803.

DE-A-955 828 discloses a slide mount carrier having a slidable multi-feed prevention member.

JP 11 249 238 discloses a slide mount carrier having a motor driven cam provided with a clutch in order to transfer slide mounts from a first position to a second position.

SUMMARY OF THE INVENTION.

Another object of the present invention is to provide a slide mount carrier having a simple construction which prevents the multi-feed of the slide mounts even though the slide mounts of several types in thickness are contained in a mount cartridge.

A further object of the present invention is to provide a slide mount carrier in which the slide mount is conveyed without an image area thereof scratched.

In order to achieve the above objects and other objects, the slide mount carrier includes the features of claim 1.

Preferred embodiments are defined by the dependent claims.

The multi-feed prevention member is swingably attached to a holding member of a slide mount carrier, and covers openably an upside of the mount outlet. When thickness of the specific slide mount is large, the multi-feed prevention member makes the height of the mount outlet substantially large.

According to the invention, the substantial height of the mount outlet is automatically adjusted. Therefore, the manual adjustment of the height is not necessary. Further, the multi-feed of the slide mounts is prevented even though several types thereof in thickness are contained in the mount cartridge. And an image area is not scratched by engaging craws, as they are outside the image area and engages with a rear end of the slide mount. Furthermore, as the supply and withdraw feed roller-pairs and the stage roller-pair contact the opposite lateral sides of the slide mount, the image area is not damaged. Due to improvement of shapes and materials of the supply and withdraw feed roller-pairs and the stage roller-pairs, it is performed to convey the slide mount at a high speed and to set it in the predetermined position on the movable stage with high accuracy.

BRIEF DISCRIPTION OF THE DRAWINGS

The above objects and advantages of the present invention will become easily understood by one of ordinary skill in the art when the following detailed description would be read in connection with the accompanying drawings:

Figure 1 is a perspective view illustrating a slide mount carrier of the present invention;

Figure 2 is an explanatory view illustrating an inside of the slide mount carrier;

Figure 3 is a perspective view illustrating a structure of a supply cartridge and a multi feed prevention plate;

Figure 4 is an exploded perspective view of a discharge member;

Figure 5 is an exploded view illustrating a warped slide mount on the discharge member;

Figure 6A and 6B are front views illustrating a condition of the slide mount on the discharge member;

Figure 7 is an explanatory view illustrating a relation between the height of the discharge member and the thickness of the slide mount;

Figure 8A - 8D are explanatory views illustrating positions of the discharge member in accordance with rotation of a disc plate;

Figure 9A - 9D are cross-sectional views illustrating a condition of that the slide mount is discharged, a multi-feed prevention plate being swingably attached;

Figure 10 is an explanatory view of an inside structure of the slide mount carrier;

Figure 11 is a side view illustrating an embodiment of an engage craw having a roller; and

Figure 12 is a perspective view illustrating an embodiment of a multi-feed prevention plate having a roller at the lowest end.

PREFERRED EMBODIMENTS OF THE INVENTION

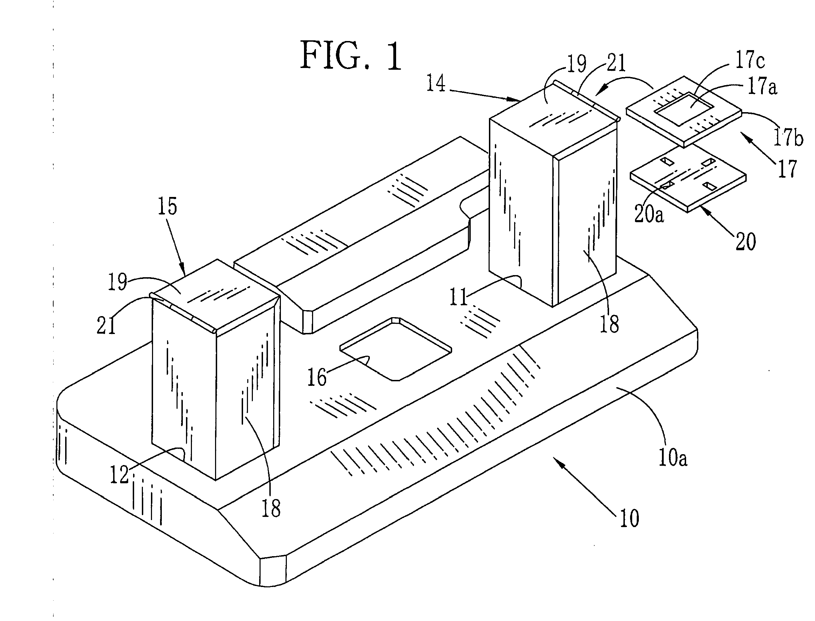

As shown in Fig. 1 , a slide mount carrier 10 includes a carrier body 10a. On the carrier body 10a, a supply cartridge load opening 11 and a withdraw cartridge load opening 12 are formed, to which a supply cartridge 14 and a withdraw cartridge 15 are loaded respectively. The supply cartridge 14 and the withdraw cartridge are exchangeable. When the supply cartridge 14 is empty, it is removed from the supply cartridge load opening 11, attached to the withdraw cartridge load opening 12, and used as the withdraw cartridge 15. The carrier body 10a has a read window 16 between the supply cartridge load opening 11 and the withdraw cartridge load opening 12. There is an illumination light source below the read window 16, and a CCD line image sensor is disposed over the read window 16. The CCD line image sensor reads out an image of the slide mount 17 line by line.

The supply cartridge 14 is constituted of a cartridge body 18 and a L-shaped cartridge door 19. The cartridge body 18 is made of a transparent plastic and is a channel-shaped form. The supply cartridge 14 contains slide mounts 17 and sort cards 20 which are stacked therein. The cartridge door 19 is secured to the top of the cartridge body 18 with a hinge 21, and therefore rotatably opened and closed. When the cartridge door 19 swings from the close position, side and top faces of the cartridge body 18 are open, and the slide mounts 17 can be easily stacked therein. When the cartridge door 19 is closed, the slide mount cartridge 13 has a shape of a rectangular parallelepiped tube.

The slide mount 17, as well known, includes a reversal film 17a and a frame holder 17b. The frame holder 17b has two rectangular openings that have a same size of an image area 17c of the reversal film 17a. The frame holder 17b is folded to sandwitch the reversal film 17a such that the two openings are overlapped. The sort card 20 has a discrimination hole 20a and is used to sort the slides mounts 17 according to order.

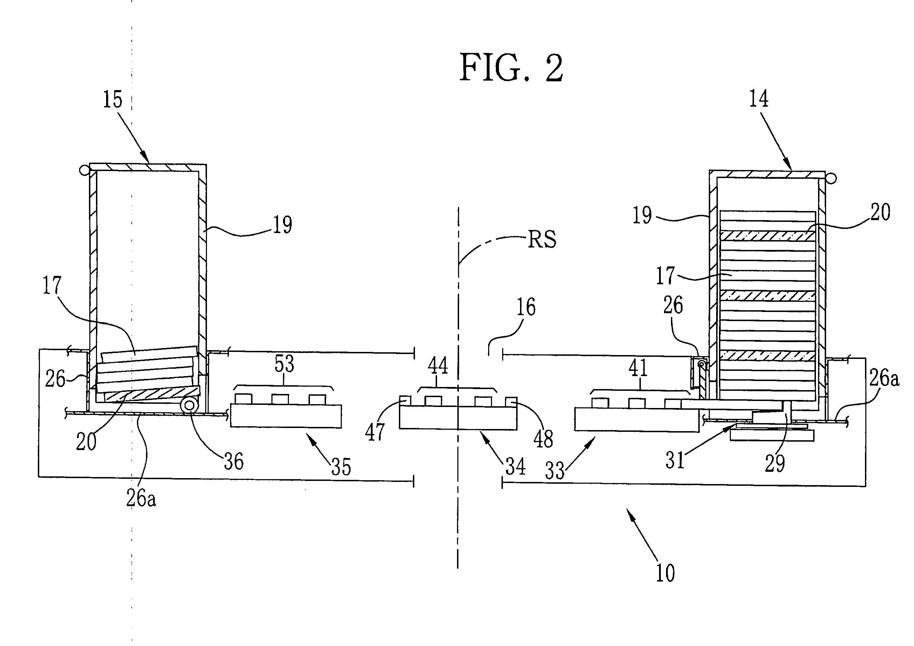

As shown in Fig. 2, the carrier body 10a includes a discharge member or push member 29, a mount supply-conveying section 33, a movable stage 34, a mount withdraw-conveying section 35 and a withdraw roller 36. The supply cartridge 14 and the withdraw cartridge 15 are loaded on base plates 26a in the supply cartridge load opening 11 and the withdraw cartridge load opening 12, respectively. The push member 29 enters through a bottom of the supply cartridge 14 and pushes out the slide mount 17 or the sort card 20 in a feeding direction A1 to the mount supply-conveying section 33. When the sort card 20 is pushed out, a sensor in the mount supply-conveying section 33 detects the discrimination hole 20a. When the slide mount 17 is pushed out, it is held on the movable stage 34, and when the slide mount 17 passes the read line RS, the image is read out.

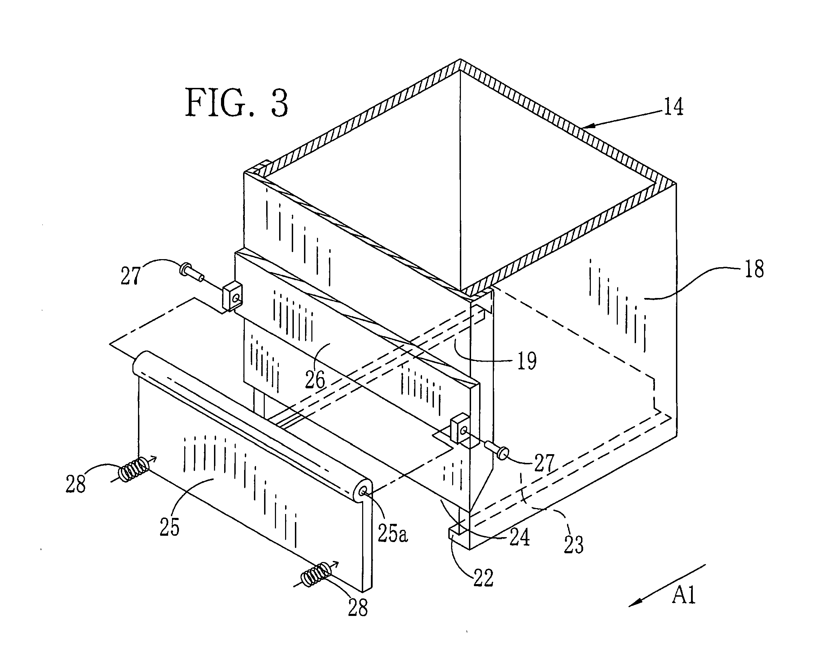

As shown in Fig. 3, the cartridge door 19 contacts a frame 26 of the carrier body 10a. The cartridge body 18 has an opening 23 through which the push member 29 enters, and two mount holder portions 22 for holding the slide mounts 17. Between the cartridge door 19 and the mount holder portion 22, a mount outlet 24 is formed. The lowest one of the slide mounts 17 is pushed out through the mount outlet 24 in the feeding direction A1. Hereafter, the lowest slide mount is called a first slide mount 17d, and the second lowest slide mount is called a second slide mount 17e. Further, as illustrated in phantom lines, the cartridge body 18 has a cutout at a foot of a face opposed to the mount outlet 24 to inhibit colliding with the push member 29.

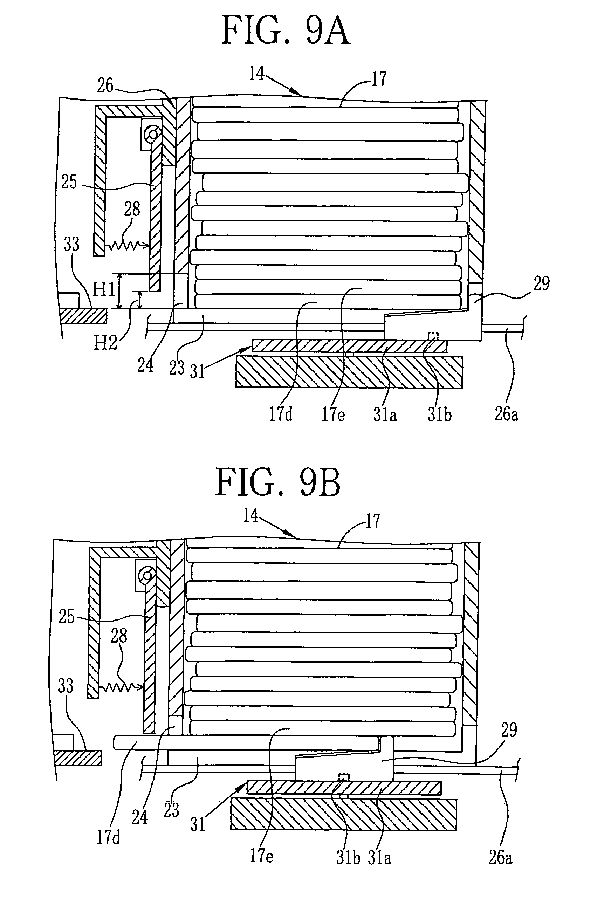

There are several types of the slide mounts 17 in thickness between 1.0 to 3.2 mm. The maximum thickness $H_{max}$ is 3.2 mm and the minimum thickness $H_{min}$ is 1.0 mm, but the types depend on makers. Therefore, the supply cartridge 14 often contains the several types of the slide mounts 17 at the same time, and the mount outlet 24 must have its height H1 (reference to Fig. 9A), for example 5 mm, such that the slide mount 17 of the maximum thickness 3.2 mm may also pass through it. Thus, all types of the slide mounts 17 can be pushed.

A multi-feed prevention plate 25 is rotatably fixed to the frame 26 near the mount outlet 24 such that two or three slide mounts 17 can't be discharged. The multi-feed prevention plate 25 has two holes 25a on both side and two pins 27 are inserted in the holes 25a on the frame 26. Further, two coiled springs 28 are attached on the multi-feed prevention plate 25 and bias it to a closing position where a top side of the mount outlet 24 is covered.

At the closing position, the height of the mount outlet 24 is substantially H2. If the minimum thickness and the maximum thickness of the slide mount 17 are $H_{min}$ and $H_{max}$ respectively. A preferable embodiment satisfies a condition as follow.

$$H_{min} < H2 < H_{max}$$

The multi-feed prevention plate 25 is pressed by the first slide mount 17d and rotated to a position in accordance with thickness of the first slide mount 17d.

The multi-feed prevention plate 25 may almost perfectly close the mount outlet 24. But in this case, the loading on the push member 29 by pushing out the slide mount 17 becomes larger.

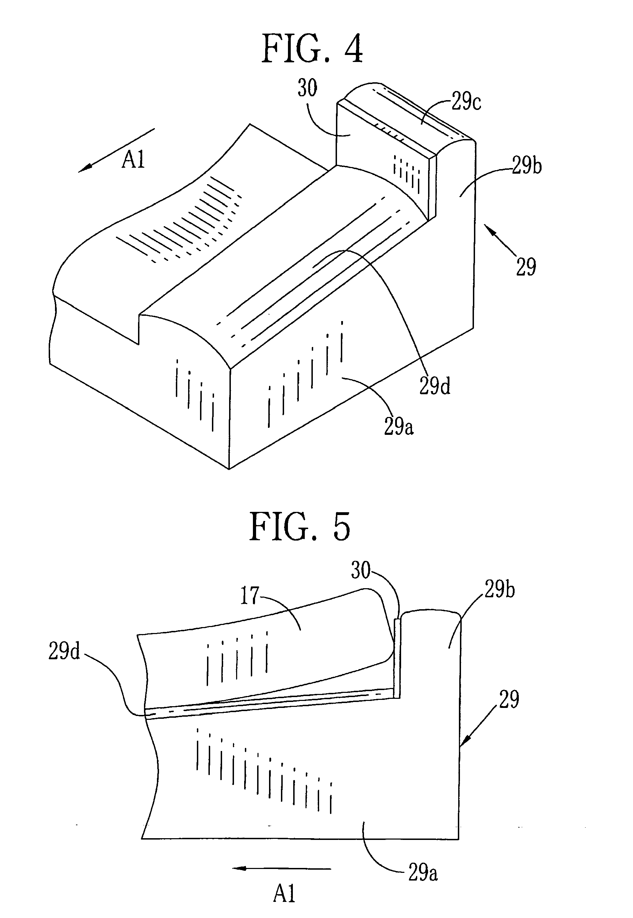

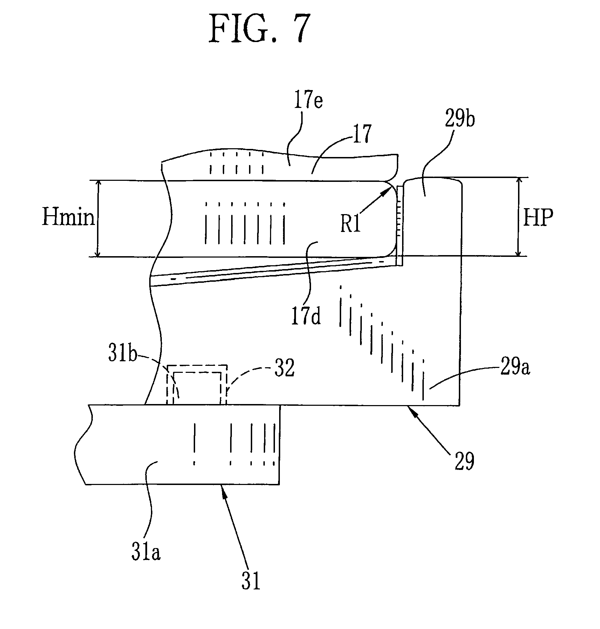

As shown in Fig. 4, the push member 29 is constituted of a plate portion 29a and an engage portion. The plate portion 29a is connected to a cam (see Fig. 7) and faces to a rear portion of the slide mount 17. The engage portion protrudes from the plate portion 29a perpendicularly to the feeding direction Al and presses a rear edge of the slide mount 17. In this embodiment, the engage portion is constituted of two engage craws 29b. The engage craws 29b are formed in both sides of the plate portion 29a, and positioned outside the image area of the slide mount 17.

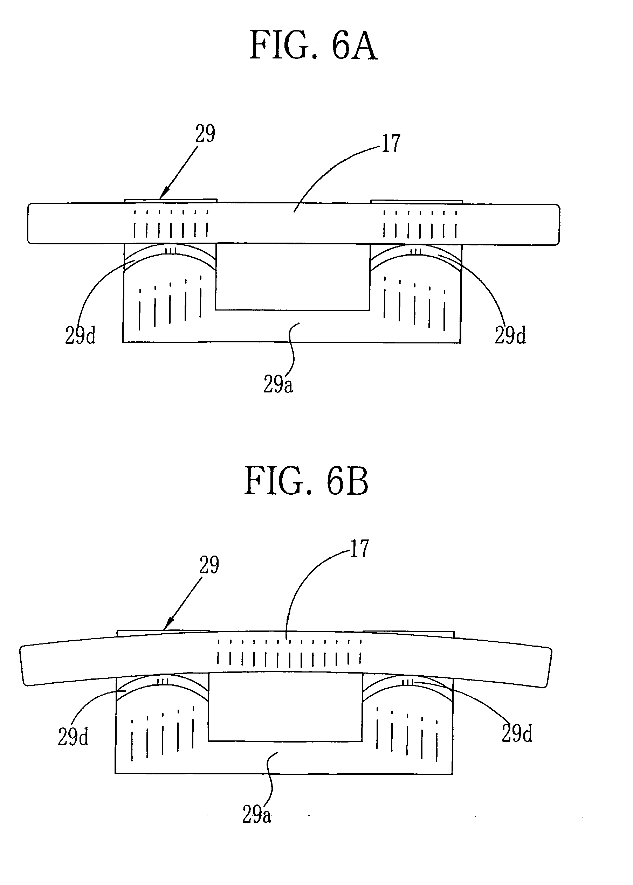

A rubber plate 30 is adhered on a face of the engage craw 29b. The rubber plate 30 directly contacts the rear edge of the slide mount 17 to press it without slipping. On the top of the engage craw 29b, there is a contact portion 29c like a periphery of a cylinder to make friction decrease. Two cylindrical protuberances 29d are formed in both sides of the plate portion 29a (see Fig. 6A), and extended forward from the engage craws 29b to make the slide mount 17 ridden thereon. Further, the height of the cylindrical protuberance 29d becomes larger from a front end of the plate portion 29a toward a rear end.

As shown in Fig. 5, even if the slide mount 17 is warped along the feeding direction A1, the rear edge of the slide mount 17 contacts the rubber plate 30. The friction between them prevents the slide mount 17 from slipping on the engage craw 29b. Further, when the push member 29 slides along the feeding direction A1, the low friction contact portion 29c contacts the second slide mount 17e. However, a friction between them is so small that the push member 29 moves smoothly.

As shown in Fig. 6A, the slide mount 17 rides on the cylindrical protuberances 29d with a linear contact and the frictional force between them is kept smallest. Therefore, the slide mount 17 slips on the cylindrical protuberance 29d, and the rear edge thereof are caught by the pair of the engage craw 29b. As shown in Fig. 6B, the slide mount 17 wraps in a widthwise direction. The cylindrical protuberances 29d also linearly contact the slide mount 17, and the frictional force is kept small between them.

The engage craw 29b is sure to engage with the slide mount 17 when a height of the engage craw 29b is as large as possible. Therefore, as shown in Fig. 7, the height HP is preferably determined to 1,2mm, which is slightly larger than a minimum thickness $H_{min}$ (1,0mm) of the slide mount 17. Further, edges of the slide mount 17 are chamfered with a radius R1 (R1 is usually about 0,2mm). Accordingly, when the first slide mount 17d is pushed out, the push member 29 doesn't engage to the rear edge of the second slide mount 17e.

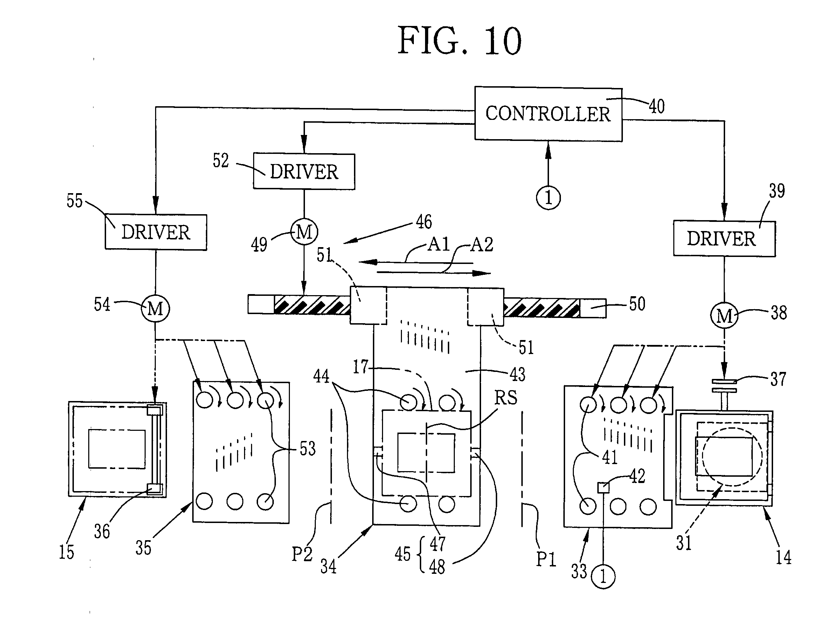

A bottom face of the plate portion 29a is contacted with a cam 31 disposed under the base plate 26a. The cam 31 includes a disc plate 31a and a connect pin 31b. The disc plate 31a is caused by a supply motor 38 (see Fig. 10) to rotate.

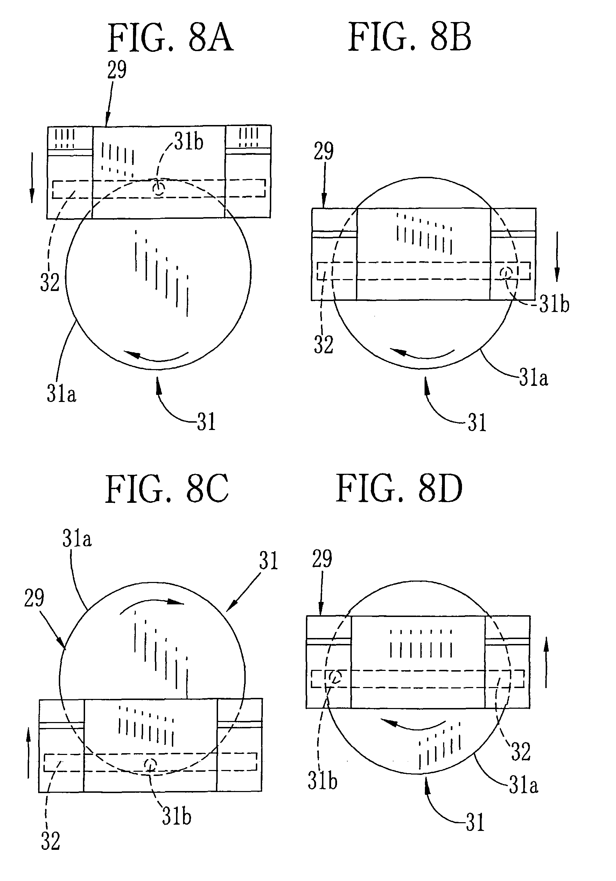

On a bottom face of the plate portion 29a, a guide groove 32 is formed. As shown in Figs. 8A-8D, the connect pin 31b is inserted in the guide groove 32. While the connect pin 31b rotates with the disc plate 31a, the connect pin 31b slides in the guide groove 32 and the push member 29 slides in a direction illustrated with an arrow. When the push member 29 shifts from a primary position illustrated in Fig. 8A to a push out position illustrated in Fig.8c, the first slide mount 17d is pushed out.

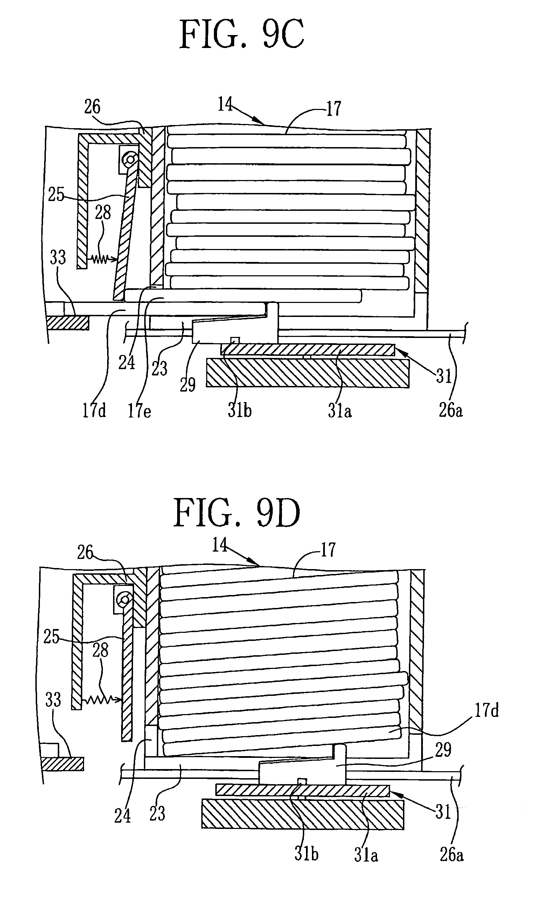

Figs.9A - 9D correspond to Fig. 8A - 8D respectively. Some portions of the frame 26 are bent so as to surround the multi-feed prevention plate 25. The coiled springs 28 are attached to them. The push member 29 shifts from a primary position illustrated in Fig. 9A to a position illustrated in Fig. 9B in accordance with rotation of the disc plate 31a, and the engage craw 29b presses the slide mount 17d. As shown in Fig. 9C, the push member 29 in the push out position pushes the first slide mount 17d out of the supply cartridge 14. While the push member 29 slides from the primary position to the push out position, the friction with the second slide mount 17e often causes to move it in the feeding direction A1. However, as the second slide mount 17e is not pressed by the push member 29, the coiled spring 28 biases the multi-feed prevention plate 25 in a direction reverse to the feeding direction. The second slide mount 17e can't press and rotate the multi-feed prevention plate 25 enough to discharge. As shown in Fig. 9D, when the push member 29 returns, a multi-feed prevention plate 25 presses the second slide mount 17e back. Further, a frictional force with the engage craw 29b causes the second slide mount 17e to shift into the supply cartridge 14.

As shown in Fig. 10, a supply motor 38 drives the cam 31 and convey roller-pairs 41. The disc plate 31a of the cam 31 is rotated through a clutch 37 by the supply motor 38. The controller 40 controls the clutch 37 and the supply motor 38 through a driver 39. When the slide mount 17 is pushed to the mount supply-conveying section 33, the controller 40 set the supply motor 38 in OFF state at first, in order to decrease the influence of inertia on rotation of the disc plate 31a. Immediately, the clutch 37 is set in disconnecting state, and the disc plate 31a stops rotating. Thereafter, the supply motor 38 is set in ON state, and it is continued to push the slide mount 17 out to the mount supply-conveying section 33.

In the mount supply-conveying section 33, the slide mount 17 is pressed from both sides by the three sets of convey roller-pairs 41 and fed to the movable stage 34. The supply motor 38 causes convey roller-pairs 41 to rotate. The mount supply-conveying section 33 has a sensor 42 for detecting the sort card 20. When the sensor 42 detects an edge of the slide mount 17 or the sort card 20, it outputs a signal to the controller 40. Then, if the sort card 20 is conveyed, the sensor 42 detects further the discrimination hole 20a.

The movable stage 34 consists of a stage body 43, two convey roller-pairs 44, a slide hold section 45, and a stage shift mechanism 46. The stage shift mechanism 46 shifts the stage body 43 between a receive position P1 for receiving the slide mount 17 from the mount supply-conveying section 33 and an deliver position P2 for delivering the slide mount 17 to the mount withdraw-conveying section 35. Positions P1 and P2 illustrated in Fig. 10 are positions of a central line of the stage body at the receive position and the deliver position. The slide mount 17, after received from the mount supply-conveying section 33, is conveyed to amount-set position on the movable stage 34 by rotation of the convey roller-pairs 44, and held by a mount hold section 45. The mount hold section 45 is constituted of protrusions 47, 48 for clamping the slide mount 17.

The stage shift mechanism 46 is constituted of a scan motor 49, a feed screw 50 and a nut portion 51 for transforming the rotation of the feed screw 50 to a sliding movement of the movable stage 34 so as to shift back and forth. At first, the movable stage 34 slides in the direction A1 and a pre scanning is carried out. When the movable stage 34 passes the reading line RS, the image is read out line by line with CCD line sensor. While the movable stage 34 shifts back in a direction A2, the movable stage 34 stops in moment and focusing is automatically carried out. When the movable stage 34 shifts in the direction A1 again, the second scan is made as a fine scanning. In pre scanning, the movable stage 34 moves fast and the image is read out roughly, and in fine scanning, the movable stage 34 moves slowly and the image is read out finely. The number 52 shows a driver for a scan motor 49.

After the image is read out, the slide mount 17 is fed from the movable stage 34 to a mount withdraw-conveying section 35 by rotation of a convey roller-pair 44. The mount withdraw-conveying section 35 includes three convey roller-pairs 53 for conveying the slide mount 17 to the withdraw cartridge 15.

Under the withdraw cartridge load opening 12, a withdraw roller 36 is disposed. The withdraw motor 54 causes the withdraw roller 36 to rotate for a predetermined time, and the slide mount 17 is withdrawn into the slide withdraw cartridge 15 and positioned under other slide mounts 17. The number 55 shows a driver for the withdraw motor 54.

The convey roller-pairs 41, 44 , 53 have shafts extending in a direction perpendicular to a conveying direction of the slide mount 17, and nip the slide mount 17 on opposite side edges thereof. Accordingly, the convey roller-pairs 41, 44, 53 does not damage the image area (film area) of the slide mount 17.

Next, an operation of the embodiment described above will be explained. When a switch on an operation panel is operated to start reading, a signal is input to the controller 40. Then, the controller 40 actuates the driver 39 to set the clutch 37 in a connection condition and the supply motor 38 can drive the disc plate 31a of the cam 31 to rotate.

Then, the controller 40 causes the supply motor 38 to drive. As shown in Figs. 8B and 9B, when the disc plate 31b rotates, the push member 29 slides in the feeding direction A1. As the cylindrical protuberance 29d is formed on the plate portion 29a, the first slide mount 17d rides on the cylindrical protuberances 29d, and engaged with the engage craw 29b. Further, as the low friction contact portion 29c is formed on the engage craw 29b, the friction with the second slide mount 17e and the engage craw 29b are reduced. As the rubber plate 30 is adhered on the engage craw 29b of the push member 29, the rear edge of the slide mount 17 does not slip on but continuously engage with the engage craw 29b. Thus, the engage craw 29b pushes the first slide mount 17d in the feeding direction A1.

As shown in Figs. 8C and 9C, the push member 29 shifts to the push out position in accordance with rotation of the disc plate 31a. At the same time, the second slide mount 17e is often moved in the feeding direction A1 by friction with the first slide mount 17d. However, the multi-feed prevention plate 25 is biased by the coiled spring 28 to press the second slide mount 17e in the direction reverse to the feeding direction A1. Therefore, only the first slide mount 17d is discharged for the mount supply-conveying section 33.

As shown in Figs. 8D and 9D, after the first slide mount 17d is discharged, the coiled spring 28 urges the multi-feed prevention plate 25 in the counterclockwise direction to cover the mount outlet 24. The disc plate 31a continues rotating, and then stops at the primary position illustrated in Figs. 8A and 9A. The low friction contact portion 29c contacts the slide mount 17e, and the push member 29 can slide to the primary position smoothly. If the clutch 37 is set in the disconnecting condition in accordance with positioning of the push member 29 at the primary position, the push member 29 cannot stop at the primary position under an effect of inertia. Therefore, the controller 40 stops the supply motor 38 at first so as to decrease the influence of inertia, and immediately, the clutch 37 is set in the disconnecting condition . Thus the push member 29 stops at the primary position. There are another embodiments for decreasing the influence of inertia. In order to decrease the influence of inertia, a clutch including a brake may be disposed between the cam 31 and the supply motor 38, or the mount supply-conveying section 33 and the cam 31 may be driven with respective motors. However, a number of parts increases in this case.

The multi-feed prevention plate 25 is rotatably attached and biased by the coiled spring 28 to open and close the upside of the mount outlet. However, another type of the multi-feed prevention plate 25 may also slide up and down.

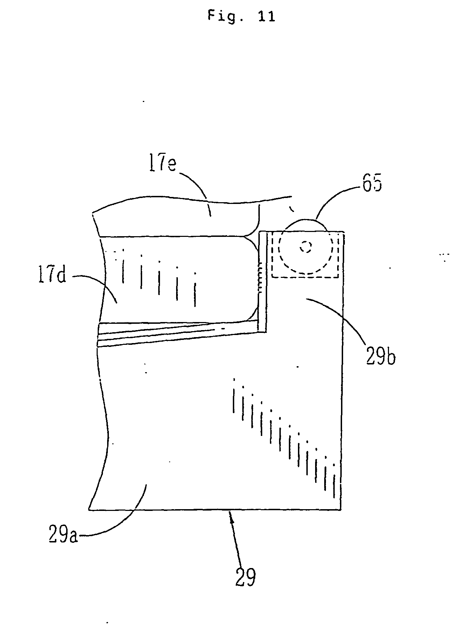

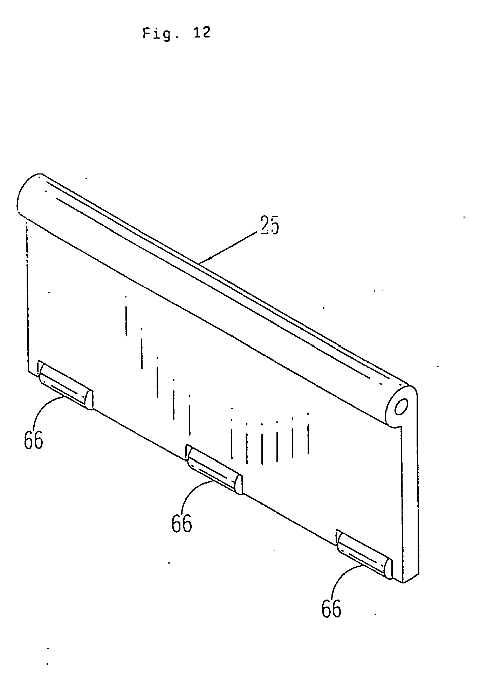

As shown in Fig. 4, the low friction contact portion 29c has a shape of periphery of cylinder. However, in Fig. 11, a free roller 65 may be attached on an upper face of the engage craw 29b. Further, the engage craw 29b made from polyacetal may also be used to reduce a frictional force. In Fig. 12, a free roller 66 may be attached to the lower end of the multi-feed prevention plate 25 for decreasing the friction with the slide mount 17 so much.

## Claims

1. A slide mount carrier (10), a mount cartridge(14) being removably attached to said slide mount carrier (10), plural slide mounts (17) being stacked in a first direction in said mount cartridge (14), said slide mount carrier (10) comprising:

   a discharge mechanism (29) for discharging a specific slide mount (17d) through a mount outlet (24) that is the lowest one of said plural slide mounts (17), said discharge mechanism (29) pushing said specific slide mount (17d) and moving said specific slide mount (17d) in a second direction perpendicular to said first direction;
   a multi-feed prevention member (25) for preventing other slide mounts (17e, 17) from being pushed out together through said mount outlet (24) when said specific slide mount (17d) is discharged, said multi-feed prevention member (25) being movable from a first position to a second position with contacting said specific slide mount (17d), in order to change a substantial height of said mount outlet (24) along said first direction according to said thickness of said specific slide mount (17d); and
   a biasing member (28) biasing said multi-feed prevention member (25) to said first position,

   **characterized in that,**
   said multi-feed prevention member (25) is swingably attached to said slide mount carrier (10), said first position is a close position in which said multi-feed prevention member (25) is neared to said mount outlet to cover an upside of said mount outlet (24), and said second position is a open position in which a lower end of said multi-feed prevention member (25) is apart from said mount outlet (24), and **in that** a rotatable roller (66) is disposed in the lower end of said multi-feed prevention member (25), said roller decreasing a friction between said multi-feed prevention member (25) and said specific slide mount (17).

2. A slide mount carrier claimed in claim 1, wherein a height of said mount outlet (24) along said first direction is larger than the maximum thickness of said slide mounts (17).

3. A slide mount carrier claimed in claim 1, wherein said substantial height is smaller than the maximum thickness (Amax) of said slide mounts (17) in said close position.

4. A slide mount carrier claimed in claim 3, said discharge mechanism comprising:

a push member (29) being movable back and forth, entering in a bottom opening formed in an underside of said mount cartridge (14); and an engage portion (29b) formed on said push member (29) said engage portion engaging with an rear edge of said specific slide mount (17d) to push in said second direction.

5. A slide mount carrier claimed in claim 4, further comprising:

a base member (10a) supporting said mount cartridge (14); and a base opening (11) formed on base member (10a), said push member (29) moving back and forth in said base opening.

6. A slide mount carrier claimed in claim 5, said discharge mechanism (29) further comprising:

a cam (31) for moving said push member (29) back and forth, said cam (31) being disposed under said base member; a motor (38) for rotating said cam (31); and a clutch (37) disposed between said motor (38) and said cam (31), said clutch being set from a connect condition to a disconnect condition after stopping driving of said motor.

7. A slide mount carrier claimed in claim 6, wherein a height of said engage portion (29b) protruding from said base member (29a) is addition of the minimum thickness and a height of chamfer of said slide mounts (17).

8. A slide mount carrier claimed in claim 6, further comprising an elastic member (30) being a part of said engage-portion, attached to a portion with which said rear edge of said specific slide mount (17d) engages.

9. A slide mount carrier claimed in claim 6, further comprising a further low friction structure (29c) being a part of said engage portion (29b) and attached to a portion contacting a bottom face of one (17c) of said other slide mounts (17), which is discharged next to said specific slide mount (17d).

10. A slide mount supply device claimed in claim 6, wherein said engage portion is a pair of engage craws (29) disposed in a rear side on a top face of said push member (29) outside an image area of said specific slide mount (17d).

11. A slide mount supply device claimed in claim 10, wherein said push member (29) has a pair of cylindrical protuberances (29d) on the top face, and the pair of said cylindrical protuberances (29d) in a line is extended from the pair of said engage craws (29c).

12. A slide mount supply device claimed in claim 11, wherein said cylindrical protuberance (29d) is inclined so that a front side thereof may be in said base member and a rear side thereof may be slightly protruded from said base member.

**Patentansprüche**

1. Diarähmchenträger (10), an dem ein Rähmchenmodul (14) lösbar angebracht ist, wobei in dem Rähmchenmodul (14) mehrere Diarähmchen in einer ersten Richtung gestapelt sind, wobei der Diarähmchenträger (10) aufweist:

einen Austragmechanismus (29) zum Austragen eines speziellen Diarähmchens (17d) durch einen Rähmchenauslass (24), wobei es sich um das unterste der mehreren Diarähmchen (17) handelt und der Austragmechanismus (29) das spezielle Diarähmchen (17d) anstößt und es in einer zweiten Richtung rechtwinklig zu der ersten Richtung bewegt; ein Mehrfachtransport-Sperrglied (25) zum Verhindern, dass weitere Diarähmchen (17e, 17) mit durch den Rähmchenauslass (24) gestoßen werden, wenn das spezielle Diarähmchen (17d) ausgetragen wird, wobei das Mehrfachtransport-Sperrglied (25) bewegbar ist aus einer ersten Stellung mit Berührung des speziellen Diarähmchens (17d), um eine maßgebliche Höhe des Rähmchenauslasses (24) entlang der ersten Richtung entsprechend der Dicke des speziellen Diarähmchens (17d) zu ändern; und ein Vorspannelement (28), welches das Mehrfachtransport-Sperrglied (25) in die erste Stellung vorspannt, **dadurch gekennzeichnet, dass** das Mehrfachtransport-Sperrglied (25) schwenkbar an dem Diarähmchenträger (10) angebracht ist, dass die erste Stellung eine Schließstellung ist, in der das Mehrfachtransport-Sperrglied (25) dem Rähmchenauslass angenähert ist, um eine Oberseite des Rähmchenauslasses (24) abzudecken, und dass die zweite Stellung eine Offenstellung ist, in der ein unteres Ende des Mehrfachtransport-Sperrglieds (25) von dem Rähmchenauslass (24) abgerückt ist, und dass eine drehbare Rolle (66) am unteren Ende des Mehrfachtransport-Sperrglieds (25) angeordnet ist, welche Reibung zwischen dem Mehrfachtransport-Sperrglied (25) und dem speziellen Diarähmchen (17) vermindert.

2. Diarähmchenträger nach Anspruch 1, bei dem eine Höhe des Rähmchenauslasses (24) entlang der ersten Richtung größer ist als die maximale Dicke der Diarähmchen (17).

3. Diarähmchenträger nach Anspruch 1, bei dem die maßgebliche Höhe kleiner ist als die maximale Dicke (Amax) der Diarähmchen (17) in der Schließstellung.

4. Diarähmchenträger nach Anspruch 3, bei dem der Austragmechanismus aufweist:

   ein Stoßelement (29), welches nach hinten und nach vorn bewegbar ist, und welches in eine Bodenöffnung, die in einer Unterseite des Rähmchenmoduls (14) ausgebildet ist, eintritt; und einen Eingriffsteil (29b), der an dem Stoßelement (29) ausgebildet ist, wobei der Eingriffsteil mit einer hinteren Kante des speziellen Diarähmchens (17d) zusammenwirkt, um es in der zweiten Richtung zu stoßen.

5. Diarähmchenträger nach Anspruch 4, weiterhin umfassend:

   ein Basiselement (10a), welches das Rähmchenmodul (14) trägt; und eine an dem Basiselement (10a) ausgebildete Basisöffnung, in der sich das Stoßelement (29) nach hinten und nach vorn bewegt.

6. Diarähmchenträger nach Anspruch 5, bei dem der Austragmechanismus (29) weiterhin aufweist:

   eine Steuerkurve (31) zum Bewegen des Stoßelements (29) nach hinten und nach vorn, wobei die Steuerkurve (31) unterhalb des Basiselements angeordnet ist; einen Motor (38) zum Drehen der Steuerkurve (31); und

eine Zwischen dem Motor (38) und der Steuerkurve (31) befindliche Kupplung (37), die nach Beendigung des Motorantriebs aus einem Verbindungszustand in einen gelösten Zustand gebracht wird.

7. Diarähmchenträger nach Anspruch 6, bei dem die Höhe des Eingriffsteils (29b), welches von dem Basiselement (29a) absteht, aus der Summe der minimalen Dicke und einer Abfasungs-Höhe der Diarähmchen besteht.

8. Diarähmchenträger nach Anspruch 6, weiterhin umfassend ein elastisches Element (30) als Teil des Eingriffsteils, angebracht an einem Bereich, mit dem die hintere Kante des speziellen Diarähmchens (17d) zusammenwirkt.

9. Diarähmchenträger nach Anspruch 6, weiterhin umfassend eine weitere Struktur (29c) geringer Reibung als Bestandteil des Eingriffsteils (29b) und angebracht an einem Bereich, der eine Bodenseite eines der weiteren Diarähmchen (17) berührt, welches als nächstes im Anschluss an das spezielle Diarähmchen (17d) ausgetragen wird.

10. Diarähmchen-Transportvorrichtung nach Anspruch 6, bei der der Eingriffsteil ein Paar von Eingriffskropfen (29c) aufweist, die sich in einer hinteren Seite auf der Oberseite des Stoßelements (29) außerhalb eines Bildbereichs des speziellen Diarähmchens (17d) befinden.

11. Diarähmchen-Transportvorrichtung nach Anspruch 10, bei der das Stoßelement (29) ein Paar zylindrischer Höcker (29d) auf der Oberseite besitzt, wobei die paarweisen zylindrischen Höcker (29d) auf einer Linie liegen, die durch die paarweisen Eingriffskröpfe (29c) verläuft.

12. Diarähmchen-Transportvorrichtung nach Anspruch 11, bei der der zylindrische Höcker (29d) derart geneigt ist, dass seine Vorderseite in dem Basiselement liegt und seine Rückseite etwas gegenüber dem Basiselement vorsteht.

**Revendications**

1. Porteur (10) pour cadres de diapositives, une cartouche à cadres (14) étant attachée de façon amovible sur ledit porteur (10) pour cadres de diapositives, une pluralité de cadres de diapositives (17) étant empilés dans une première direction dans ladite cartouche à cadres (14), ledit porteur (10) pour cadres de diapositives comprenant :

   un mécanisme de décharge (29) pour décharger un cadre de diapositive spécifique (17d) à travers une sortie de cadre (24) qui est le cadre le plus en bas de ladite pluralité de cadres de diapositives (17), ledit mécanisme de décharge (29) poussant ledit cadre de diapositive spécifique (17d) et déplaçant ledit cadre de diapositive spécifique (17d) dans une seconde direction perpendiculaire à ladite première direction ;

un élément d'empêchement de sortie multiple (25) pour empêcher à d'autres cadres de diapositives (17e, 17) d'être poussés vers l'extérieur conjointement à travers ladite sortie de cadre (24) quand ledit cadre de diapositive spécifique (17d) est déchargé, ledit élément d'empêchement de sortie multiple (25) étant mobile depuis une première position jusqu'à une seconde position qui vient en contact avec ledit cadre de diapositive spécifique (17d) afin de changer la hauteur matérielle de ladite sortie de cadre (24) le long de ladite première direction, en accord avec l'épaisseur dudit cadre de diapositive spécifique (17d) ; et

un élément de sollicitation (28) qui sollicite ledit élément d'empêchement de sortie multiple (25) vers ladite première position, **caractérisé en ce que** ledit élément d'empêchement de sortie multiple (25) est attaché en pivotement sur ledit support (10) pour cadres de diapositives, ladite première position est une position fermée dans laquelle ledit élément d'empêchement de sortie multiple (25) est approché de ladite sortie de cadre pour couvrir un côté supérieur de ladite sortie de cadre (24), et ladite seconde position est une position ouverte dans laquelle une extrémité inférieure dudit élément d'empêchement de sortie multiple (25) est espacée depuis ladite sortie de cadre (24) ; et

**en ce qu'**un galet rotatif (26) est disposé dans l'extrémité inférieure dudit élément d'empêchement de sortie multiple (25), ledit galet diminuant la friction entre ledit élément d'empêchement de sortie multiple (25) et ledit cadre de diapositive spécifique (17).

2. Support pour cadres de diapositives selon la revendication 1, dans lequel la hauteur de ladite sortie de cadre (24) le long de ladite première direction est supérieure à l'épaisseur maximum desdits cadres de diapositives (17).

3. Support pour cadres de diapositives selon la revendication 1, dans lequel ladite hauteur matérielle est inférieure à l'épaisseur maximum (Amax) desdits cadres de diapositives (17) dans ladite position fermée.

4. Support pour cadres de diapositives selon la revendication 3, ledit mécanisme de décharge comprenant :

un élément poussoir (29) qui est déplaçable en va-et-vient en pénétrant dans une ouverture inférieure formée dans une face inférieure de ladite cartouche de cadres (14) ; et

une portion d'engagement (29b) formée sur ledit élément poussoir (29), ladite portion d'engagement venant engager un bord arrière dudit cadre de diapositive spécifique (17d) pour pousser dans ladite seconde direction.

5. Support pour cadres de diapositives selon la revendication 4, comprenant en outre :

un élément de base (10a) supportant ladite cartouche de cadres (14) ; et

une ouverture de base (11) formée sur l'élément de base (10a), ledit élément poussoir (29) se déplaçant en va-et-vient dans ladite ouverture de base.

6. Support pour cadres de diapositives selon la revendication 5, ledit mécanisme de décharge (29) comprenant en outre :

une came (31) pour déplacer ledit élément poussoir (29) en va-et-vient, ladite came (31) étant disposée sous ledit élément de base ;

un moteur (38) pour faire tourner ladite came (31) ; et

un embrayage (37) disposé entre ledit moteur (38) et ladite came (31), ledit embrayage étant mis depuis une condition de connexion vers une condition de déconnexion après l'arrêt de l'entraînement dudit moteur.

7. Support pour cadres de diapositives selon la revendication 6, dans lequel la hauteur de ladite portion d'engagement (29b) en projection depuis ledit élément de base (29a) est égale à l'addition de l'épaisseur minimum et de la hauteur d'un chanfrein desdits cadres de diapositives (17).

8. Support pour cadres de diapositives selon la revendication 6, comprenant en outre un élément élastique (30) qui forme partie de ladite portion d'engagement, attaché à une portion avec laquelle est engagé ledit bord arrière dudit cadre de diapositive spécifique (17d).

9. Support pour cadres de diapositives selon la revendication 6, comprenant en outre une autre structure (29c) à faible friction qui fait partie de ladite portion d'engagement (29b) et qui est attachée à une portion en contact avec une face inférieure de l'un (17c) desdits autres cadres de diapositives (17) qui est déchargé à la suite dudit cadre de diapositive spécifique (17d).

**10.** Support pour cadres de diapositives selon la revendication 6, dans lequel ladite portion d'engagement est une paire de griffes d'engagement (29) disposées dans un côté arrière sur une face supérieure dudit élément poussoir (29) à l'intérieur d'une zone image dudit cadre de diapositive spécifique (17d).

**11.** Support pour cadres de diapositives selon la revendication 10, dans lequel ledit élément poussoir (29) présente une paire de protubérances cylindriques (29d) sur la face supérieure, et la paire desdites protubérances cylindriques (29d) dans une ligne est en extension depuis la paire desdites griffes d'engagement (29c).

**12.** Support pour cadres de diapositives selon la revendication 11, dans lequel ladite protubérance cylindrique (29d) est inclinée de telle façon que son côté avant peut se trouver dans ledit élément de base, et son côté arrière peut être légèrement en projection depuis ledit élément de base.

# FIG. 1

FIG. 2

FIG. 3

# FIG. 4

# FIG. 5

# FIG. 6A

# FIG. 6B

# FIG. 7

# FIG. 8A

# FIG. 8B

# FIG. 8C

# FIG. 8D

# FIG. 9A

# FIG. 9B

# FIG. 9C

# FIG. 9D

# FIG. 10

EP 1 191 388 B1

Fig. 11

17e

65

17d

29b

29a

29

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H511149 A
- JP H11112714 A
- DE 1089997 A
- US 4389803 A
- DE 955828 A
- JP 11249238 A